# EUROPEAN PATENT APPLICATION

(11) **EP 3 627 799 A1**
(43) Date of publication of application: **25.03.2020**
(21) Application number: 18196221.8
(22) Date of filing: 24.09.2018
(51) Int. Cl.: H04L 29/08, H04L 29/06, H04W 60/00, H04W 88/06, H04W 4/00, H04W 48/18

(54) **COMMUNICATION TERMINAL AND METHOD FOR ESTABLISHING A COMMUNICATION SESSION**

(71) Applicant: NTT DOCOMO, INC., Chiyoda-ku Tokyo 100-6150 (JP)
(72) Inventor: THAKOLSRI, Srisakul, 80687 Munich (DE); SAMA, Malla Reddy, 80687 Munich (DE); MUTIKAINEN, Jari, 80687 Munich (DE); GUERZONI, Riccardo, 80687 Munich (DE); MINOKUCHI, Atsushi, Tokyo, 100-6150 (JP)
(74) Representative: Viering, Jentschura & Partner mbB Patent- und Rechtsanwälte

(57) **Abstract**

According to one embodiment, a communication terminal is described comprising a registration circuit configured to register the communication terminal with a first mobile communication system core network, a determination circuit configured to determine whether to establish a communication session via the first mobile communication system core network or via a second mobile communication system core network and a session establishment circuit configured to, if the determiner has determined to establish the communication session via the second mobile communication system core network, establish the communication session via the second mobile communication system core network wherein the registration circuit is configured to keep the registration of the communication terminal with the first mobile communication system core network.

## Description

The present disclosure relates to communication terminals and methods for establishing a communication session.

An operator of a mobile communication system may provide a mobile communication system with multiple core networks, in particular according to different mobile communication generations, e.g. Fourth Generation (4G) and Fifth Generation (5G). Typically, a mobile communication terminal registers with one of the core networks, e.g. to the 4G core network or to the 5G core network. However, it may be desirable that certain applications or session types use a core network of a certain generation. Efficient approaches for such use cases are desirable.

According to one embodiment, a communication terminal is provided including a registration circuit configured to register the communication terminal with a first mobile communication system core network, a determination circuit configured to determine whether to establish a communication session via the first mobile communication system core network or via a second mobile communication system core network, and a session establishment circuit configured to, if the determiner has determined to establish the communication session via the second mobile communication system core network, establish the communication session via the second mobile communication system core network wherein the registration circuit is configured to keep the registration of the communication terminal with the first mobile communication system core network. If the result of the determination circuit is to establish the communication session via the second mobile communication system core network and the communication terminal is not yet registered with the second mobile communication system core network, the communication terminal may or may not perform registration with the second mobile communication system prior to establishing the communication session via the second mobile communication system.

According to a further embodiment, a method for establishing a communication session according to the communication terminal described above is provided.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a radio communication system.
- Figure 2: shows a message flow diagram illustrating an example with dual-registration in EPC (Evolved Packet Core) and 5GC (Fifth Generation Core) based on a policy of the UE according to an embodiment.
- Figure 3: shows a message flow diagram illustrating an example with core network guidance with an indication of core network preference with dual-registration in EPC and in 5GC according to an embodiment.
- Figure 4: shows a radio communication system for connection establishment for an EPC CUPS (control and user plane separation) architecture according to an embodiment.
- Figure 5: shows a message flow diagram illustrating an option for the architecture of figure 5 according to an embodiment.
- Figure 6: shows a message flow diagram illustrating another option for the architecture of figure 5 according to an embodiment.
- Figure 7: shows a radio communication system for connection establishment via 5GC for conventional EPC (i.e. without CUPS) according to an embodiment.
- Figure 8: shows a message flow diagram illustrating an example based on the architecture of figure 8 according to an embodiment.
- Figure 9: shows a communication terminal according to an embodiment.
- Figure 10: shows a flow diagram illustrating a method for establishing a communication session according to an embodiment.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

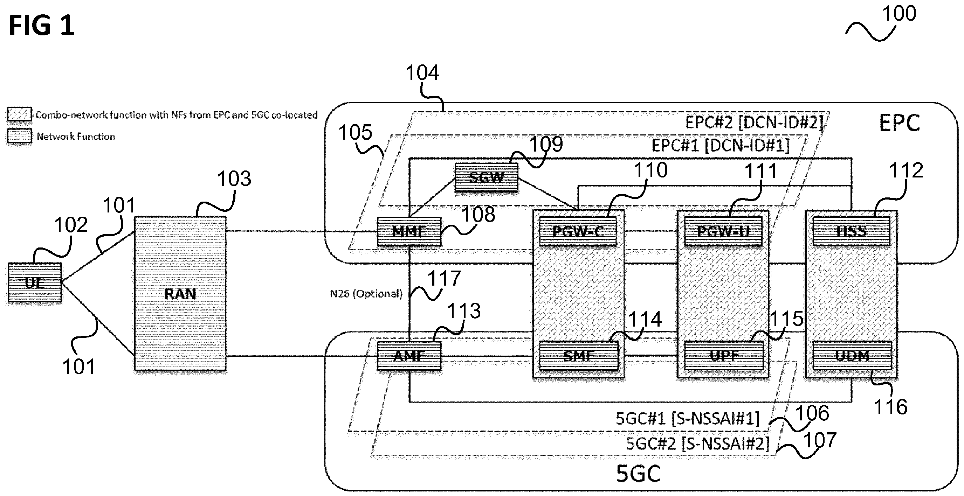

Figure 1 shows a radio communication system 100.

The radio communication system 100 includes a radio communication terminal device 102 such as a UE (user equipment), a nano equipment (NE), and the like.

Furthermore, the radio communication system 100 includes a Radio Access Network (RAN) 103, which may include a plurality of radio access network nodes, i.e. base stations configured to provide radio access in accordance with a 5G (Fifth Generation) radio access technology (5G New Radio) or configured to provide radio access in accordance with LTE (Long Term Evolution) or another mobile radio communication standard. Each radio access network node may provide a radio communication with the radio communication terminal device 102 over a respective air interface 101 (which may operate according to different communication standards). It should be noted that the radio access network 103 may include any number of radio access network nodes.

The radio access network 103 may be coupled with multiple core networks 104, 105, 106, 107 including two 4G core networks, i.e. EPCs (Evolved Packet Cores) 104, 105 and two 5G core networks (5GCs) 106, 107. That is because an operator may have multiple core networks, in this case the two 4G core networks denoted EPC#1, EPC#2 (e.g. dedicated core networks (DCNs) for CIoT (cellular Internet of things)), and the two 5G core networks denoted 5GC#3, 5GC#4 (e.g. cloud native CNs for verticals).

In addition, different radio access networks may be coupled with different core networks. For example, a radio access network in accordance with LTE (E-UTRAN) is coupled with 4G core network (EPC) and another radio access network in accordance with 5G New Radio (5G-NR) is coupled with 5G core network (5GC).

Each of the 4G core networks 104, 105 has an MME (Mobility Management Entity) 108, an SGW (Serving Gateway) 109, a PGW-C (Packet Data Gateway - Control Plane) 110 and a PGW-U (Packet Data Gateway - User Plane) 111. These entities may be at least partially shared among the 4G core networks 104, 105. Alternative deployment (not depicted in this Figure 1) is that the PGW-C and the PGW-U may be configured such that they are co-located and coupled as one network entity, for example, like the PGW in legacy EPC. The 4G core networks 104, 105 further include a HSS (Home Subscriber Server) 112 which may be or may not be shared among multiple 4G core networks.

Each of the 5G core networks includes an AMF (Access and Mobility Management Function) 113, an SMF (Session Management Function) 114 and a UPF (User Plane Function) 115. These entities may be partially shared among the 5G core networks 106, 107. The 5G core networks 106, 107 further include a UDM (Unified Data Management) 112 which may be or may not be shared among 5G core networks.

The PGW-C 110 and the SMF 114 may be implemented by a common network function belonging to at least one of the 4G core networks 104, 105 and belonging to at least one of the 5G core networks 106, 107. Similarly, the PGW-U 111 and the UPF 115 as well as the HSS 112 and the 116 may be implemented by a respective common network function.

There may be an interface 117 between the MME 108 of a 4G core network 104, 105 and the AMF 113 of a 5G core network 106, 107. According to 3GPP (Third Generation Partnership Project) this interface 117, denoted as N26, is optional. For various use cases, it is desirable that the UE 102 is able to have multiple packet data connections or sessions, including both one or more PDN (Packet Data Network) connections, i.e. connections to an EPC 104, 105, and one or more PDU (Packet data Unit) sessions, i.e. connections to a 5GC 106, 107 simultaneously, which reside in different core networks.

For example, a UE should be able to have a PDN connection in EPC#1 to connect to IMS VoLTE (Internet Protocol Multimedia Subsystem Voice over Long Term Evolution) and simultaneously have a PDU session in 5GC#1 for data communication.

For this, a mechanism is needed to enable a UE 102 to have multiple packet data sessions or connections to different core networks at the same time.

According to 3GPP (Release 15), there are two possible modes for a UE to register to the network side (i.e. to one or more of the core networks 104, 105, 106, 107):
- Single registration mode (with or without N26): UE 102 is registered either in EPC (i.e. one or both 4G core networks 104, 105) or in 5GC (i.e. one or both 5G core networks 106, 107)
- Dual registration mode (only for the case without N26 case): UE is registered in both EPC and 5GC

The UE 102 decides to perform a single or dual registration after it receives an information from a core network 104, 105, 106, 107 indicating that EPS&5GS (Evolved Packet System & 5G system) interworking without N26 is supported. Further, according to 3GPP, regarding mobility for UE in single-registration mode, the UE has to move all PDU Sessions to EPC such that it is in this case not possible to have multiple sessions in different core networks. Regarding mobility for UE in dual-registration mode, the UE may select certain PDN Session(s) to transfer to EPC, while keeping other PDU sessions in 5GC. How to select which PDU Session to transfer is left to UE's configuration and is not specified by 3GPP. It is thus up to the UE to decide whether to establish a PDU Session in 5GC or to establish a PDN connection in EPC. There is no network guidance to the UE provided according to 3GPP Release 15.

Further, according to 3GPP, the so-called UE Route Selection Policy (URSP) is provided which is a policy used by the UE to determine how to route outgoing traffic, for example, to determine whether a detected application can be associated to an established (already existed) PDU Session, whether a detected application can be offloaded to non-3GPP access outside a PDU Session and whether a detected application can trigger the establishment of a new PDU Session. URSP rules include traffic descriptors that specify the matching criteria and one or more of the following components:
- SSC Mode Selection Policy (SSCMSP): To associate the matching application with SSC modes
- Network Slice Selection Policy (NSSP): To associate the matching application with S-NSSAI (Network Slice Selection Assistance Information)
- DNN (Data Network Name) Selection Policy: To associate the matching application with a DNN
- PDU Session Type Policy: To associate the matching application with a PDU Session Type
- Non-seamless Offload Policy: To determine that the matching application should be non-seamlessly offloaded to non-3GPP access (i.e. outside of a PDU Session)
- Access Type preference: To indicate the preferred Access Type (3GPP or non-3GPP) for a new PDU Session to establish.

Further, 3GPP provides Emergency (EMC) Services Fallback. EMC fallback supports both RAT fallback (e.g. 5G RAN does not support EMC but 4G RAN does) and EPC System fallback. EMC fallback is only for Single Registration mode. If a 5G communication network supports EMC, the support is indicated to a UE via a Registration Accept message on per-TA (Tracking Area) and per-RAT basis. The UE and 5GC may support the mechanism to direct or redirect the UE either towards 4G RAN (E-UTRAN) connected to 5GC (RAT fallback) when 5G RAN does not support EMC or towards a 4G network (E-UTRAN connected to EPC System fallback) when the 5GC does not support EMC.

If an AMF has indicated support for EMC fallback via an Registration Accept message for the current RAN, the UE sends a Service Request message indicating that it requires EMC fallback. The AMF triggers an N2 procedure resulting in either CONNECTED state mobility (Handover procedure) or IDLE state mobility (redirection) to either E-UTRAN and 5GC or to E-UTRAN and EPC depending on factors such as N26 availability, network configuration and radio conditions. In the N2 procedure, the AMF based on support for Emergency Services in 5GC or EPC may indicate the target CN for the RAN node to know whether inter-RAT fallback or inter-system fallback is to be performed. Either the 5G RAN initiates inter-NG RAN N2 based handover or redirection to a 5GC connected E-UTRAN cell if UE is camped on 5G RAN or the 5G RAN initiates a handover to EPS with N26 procedure or redirection to E-UTRAN connected to EPS. After handover, the UE establishes a PDN connection for EMC service and performs IMS procedures for establishment of IMS EMC service. Existing PDU sessions will be terminated when an EMC fallback is performed.

Another feature provided according to 3GPP is IMS Voice Service Fallback. It supports redirection of a UE from 5G RAN connected to 5GC either towards E-UTRAN connected to 5GC (RAT fallback) or towards EPS (E-UTRAN connected to EPC System fallback). The serving AMF indicates toward the UE during the registration procedure that IMS voice over PS session is supported. If a request for establishing the QoS flow for IMS voice reaches the 5G RAN, the 5G RAN rejects the request and may trigger one of the following procedures depending on UE capabilities, N26 availability, network configuration and radio conditions:
- Redirection to EPS;
- Handover procedure to EPS;
- Redirection to E-UTRAN connected to 5GC; or
- Handover to E-UTRAN connected to 5GC.

For example, 5G RAN receives request for establishing the QoS flow for IMS voice from 5GC, and 5G RAN decides to trigger IMS fallback to EPS. 5G RAN may initiate measure report solicitation from the UE including E-UTRAN as target. 5G RAN rejects PDU Session modification to setup QoS flow for IMS voice via AMF with an indication that mobility due to IMS voice fallback is ongoing and initiates either handover to EPS with N26 procedure or access network release via inter-system redirection to EPS. The UE initiates Tracking Area Update (TAU) procedure for the case of 5GS to EPS handover and case of inter-system redirection to EPS with N26. For the case of inter-system redirection to EPS without N26, UE initiates an Attach procedure with a PDN connectivity request with request type "handover from 5GC".

In the following, approaches for supporting simultaneous communication services or sessions towards multiple core networks of different mobile networks (e.g. 4G and 5G networks) are described according to various embodiments. In particular, various embodiments allow maintaining PDU sessions in 5GC while performing fallback to 4GC for a particular application or service. According to various embodiments, both core network and radio access network fallback are supported. Furthermore, dual registration is supported according to various embodiments.

It is to be noted that although various embodiments describe only maintaining ongoing PDU Session in 5GC while performing fallback to 4GC for a particular application or service, the approaches described herein are also applicable for the reverse direction, i.e. maintaining ongoing PDN connections in 4GC while performing a transfer of a PDN connection request to 5GC for a particular application or service.

It is further to be noted that Figure 1 only depicts a combo-node, where network entity in 5GC and in EPC are co-located to support interworking between EPC and 5GC, in particular in order to support session continuity or service continuity when the UE is relocated to a target CN, which is different than the source CN, e.g., when the UE is needed to be relocated from the 5GC to EPC due to a UE mobility event. However, in fact, the approaches described herein could also be applicable for the case, where the network entity in EPC and in 5GC are not co-located, and hence not considered as a combo-node. One example is when the UE establishes a PDU Session for accessing the Internet service to the 5GC and later on the UE sends a request for establishment a new Session for IMS service to the EPC. In this example, the SMF and UPF allocated for the Internet service for this UE may not be necessarily to be a combo-node, i.e., no PGW-C and no PGW-U collocated with the SMF and the UPF respectively, since it may not be necessary to have session continuity or service continuity for the Internet service. Whereas, for the IMS service, which may require session and service continuity depending on the operator's policy and the service level agreement (SLA) for the IMS service with the customer, the SMF and UPF allocated for this IMS service do have PGW-C and PGW-U functionality co-located. To enable this, the SMF and UPF selection could be performed by considering the DNN, when the UE sends a PDU session establishment request to the 5GC.

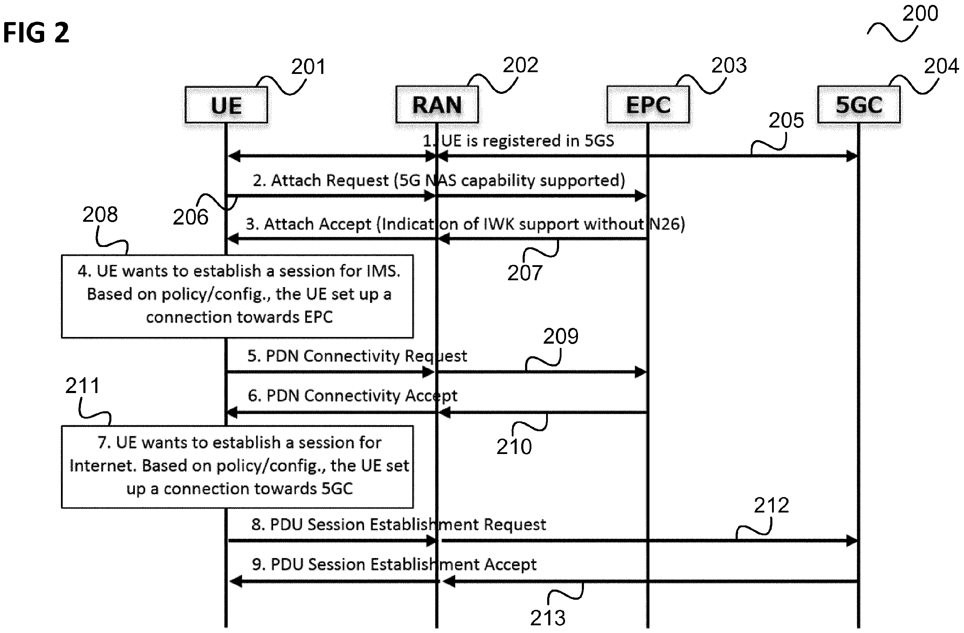

Figure 2 shows a message flow diagram 200 illustrating an example with dual-registration in EPC and 5GC based on a policy of the UE.

A UE 201 (e.g. corresponding to UE 102), a RAN 202 (e.g. corresponding to RAN 103), an EPC 203 (e.g. corresponding to one of EPC 104, 105) and a 5GC 204 (e.g. corresponding to one of 5GCs 106, 107) are involved in the message flow.

In 205, the UE 201 registers with the 5GC 204 via RAN 202.

In 206, the UE 201 sends an Attach request to the EPC 203 via the RAN 202. With the Attach request the UE 201 may indicate that it supports 5G NAS capability.

In 207, the EPC 203 responds by means of an Attach Accept which may include an indication of interworking (IWK) support without N26. It should be noted that the indication of interworking support without N26 may be provided already by the 5GC 204 to the UE, for example, while the UE is registering to the 5GC, e.g., in the Registration Accept message. In such case, the EPC 203 may not need to provide this IWK indication support without N26.

The UE 201 is thus registered with both 4G core network 203 and 5G core network 204.

It is assumed that in 208, the UE wants to establish a session for IMS and that based on a policy or configuration of the UE 201, e.g. stored in a memory of the UE 201, the UE is configured to set up a connection towards the EPC 203 for the IMS session.

Accordingly, in 209, the UE 201 sends a PDN connectivity request to the EPC 203. The EPC 203 responds by means of a PDN connectivity accept in 210.

It is further assumed that in 211, the UE wants to establish a session for Internet access. Based on a policy or configuration of the UE 201, e.g. stored in a memory of the UE 201, the UE is configured to set up a connection towards the 5GC 204 for the Internet access session.

Accordingly, in 212, the UE 201 sends a PDU session establishment request to the 5GC 204. The 5GC 204 responds by means of a PDU session establishment accept in 213.

In summary, according to the approach of figure 2, a UE 201 is registered in both EPC 203 and 5GC 204 before establishing a PDN connection in EPC or a PDU session in 5GC. For each application running on the UE 201 (or for each session type or communication service the UE 201 may request), there may be a policy or configuration indicated in the UE specifying which application (or session type or communication service) should go over which CN (e.g. either 4G or 5G in this example). A policy stored in the UE 201 could for example indicate that a first application app#1 is mapped to a certain S-NSSAI in 5GC and a second application app#2 is mapped to a certain DCN-ID.

A policy based on which the UE 201 decides via which core network a session or service should be requested could for example be stored by means of USRP rules. An example is given in table 1 for two (or analogously more) applications.

**Table 1: USRP rule extension example**

| USRP rules | |
|---|---|
| Rule Precedence =1 | Route Selection Descriptor Precedence=1 |
| Traffic filter: App=App 1 | |
| | Network Slice Selection: S-NSSAI-a |
| | SSC Mode Selection: SSC Mode 3 |
| | DNN Selection: IMS |
| | Access Type preference: 3GPP access |
| | CN preference: EPC |
| Rule Precedence =2 | Route Selection Descriptor Precedence =1 |
| Traffic filter: App=App2 | |
| | Network Slice Selection: S-NSSAI-a |
| | Access Type preference: 3GPP access |
| | CN preference: 5GC |
| ... | ... |

As can be seen, for each application a core network preference is indicated based on which the UE 201 decides from which core network it requests a session or communication service for the application. It should be noted that these added parameters in the URSP rules may be called with different names, e.g., NAS preference to indicate whether to use 4G NAS or 5G NAS.

In case that the UE 201 is not yet registered in EPC 203, but wants to establish a PDN connection for a specific application, this could be a trigger for the UE 201 to register in EPC. This is not depicted in figure 2 where instead the UE 201 is registered in both core networks after 207.

It should be noted that according to one embodiment which is 3GPP, the approach of figure 2 may only work for the case of no N26 interface 117 (since only then, dual registration (DR) is allowed according to 3GPP). However, according to one embodiment, the network side may send an indication of interworking support without N26 to the UE 201 when the UE performs registration procedure to the 5GC 204 or when the UE 201 performs Attach procedure to the EPC 203, even though in fact there is N26 interface deployed in the network. One of the reasons of doing this is to allow the UE to have services in different CNs simultaneously, the network side knows that the UE 201 needs to operate in DR mode.

It should further be noted that before 208, the UE 201 may establish another PDU session, e.g. an Internet session, via the 5GC 204. This other session may be kept via the 5GC 204 even though the IMS session is established via the EPC 203.

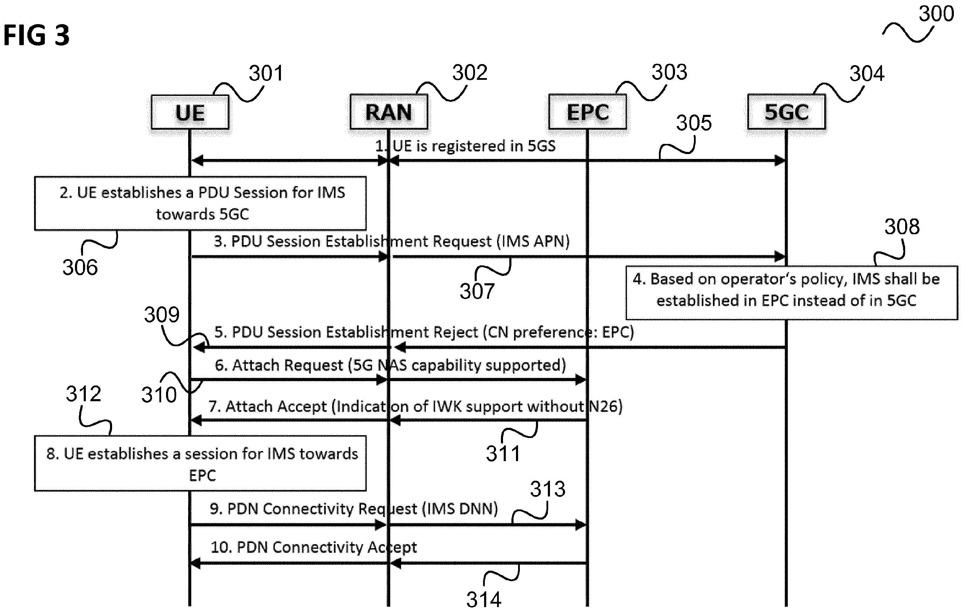

Figure 3 shows a message flow diagram 300 illustrating an example with core network guidance with an indication of CN preference with dual-registration in EPC and in 5GC.

As in figure 2, a UE 301 (e.g. corresponding to UE 102), a RAN 302 (e.g. corresponding to RAN 103), an EPC 303 (e.g. corresponding to one of EPC 104, 105) and a 5GC 304 (e.g. corresponding to one of 5GCs 106, 107) are involved in the message flow.

In 305, the UE 301 registers with the 5GC 304 via RAN 302. In this example, the UE is first registered in the 5GC 304 (i.e. the 5GC is the first core network).

In 306, it is assumed that the UE 301 decides to establish a PDU session for IMS with the 5GC 304.

Accordingly, in 307, the UE 301 sends a PDU session establishment request (with an IMS access point name (APN)) to the 5GC 304.

In 308, in response to the PDU session establishment request the 5GC 304 checks whether this PDU session should be rather established via EPC (as second core network) based on a policy of the operator of the 5GC 304 and/or a local configuration available in a network entity responsible for establishment a PDU Session for the UE in the 5GC 304, for example the SMF 114. The check may also be based on a subscription of the UE, for example stored in the UDM 116 in 5GC. The subscription of the UE can be retrieved by the SMF 114 or the AMF 113. If the PDU session should be established via EPC, the respective SMF 114 can follow one of the following two options:
Option 1: the SMF 114 rejects the PDU Session Establishment with a new cause saying that the PDU session to establish is rejected as it is not possible in 5GC, but should be established in other CNs (e.g., EPC) instead.
Option2: the SMF 114 indicates a preference to use EPC for this PDU Session to the UE 301. This is the case in example of figure as 309.

Accordingly, in 310, the UE 301 then registers with the EPC 303 by sending an attach request in 310 and receiving an attach response in 311 and, in 312, initiates establishing a session for IMS towards the EPC 303 by setting up a PDN connection for the rejected PDU Session which the UE earlier requested in the 5GS 304. For this, the UE 301 sends a PDN connectivity request to the EPC 303 in 313 to which the EPC responds by means of a PDN connectivity accept in 314.

It should be noted that whether the UE 301 really performs registration to the EPC 303 after receiving signalling from the SMF 114 may depend on the UE configuration or policy available at the UE 301.

It should further be noted that before 306, the UE may establish another PDU session, e.g. an Internet session, via the 5GC 304. This other session may be kept via the 5GC 304 even though the IMS session is established via the EPC 303 (i.e. is redirected to the EPC).

As the approach of figure 2, the approach of figure 3 requires dual registration and may thus only work for the case of no N26 interface 117 (since only then, dual registration (DR) is allowed according to 3GPP). However, according to one embodiment, the network side may send an indication of interworking support without N26 to the UE 201 when the UE performs registration procedure to the 5GC 204 or when the UE 201 performs Attach procedure to the EPC 203, even though in fact there is N26 interface deployed in the network. One of the reasons of doing this is to allow the UE to have services in different CNs simultaneously, the network side knows that the UE 301 needs to operate in DR mode.

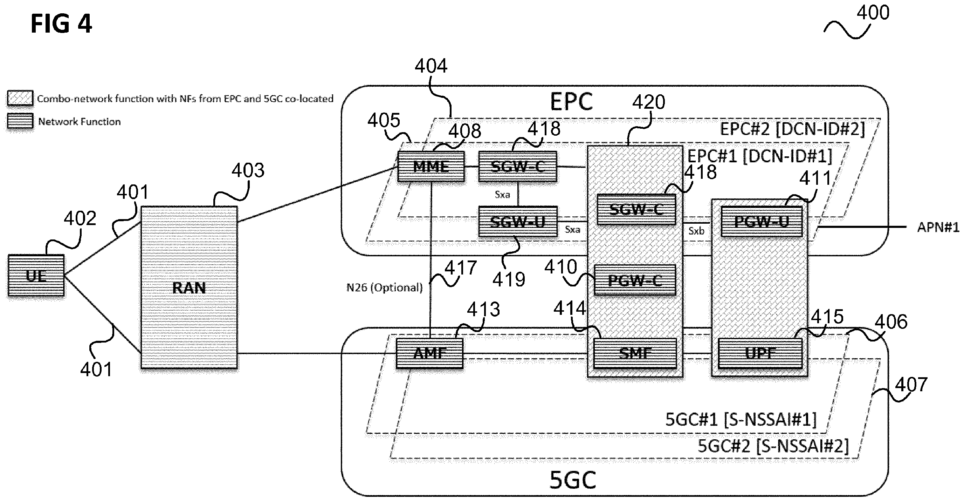

Figure 4 shows a radio communication system 400 for PDN Connection Establishment via SMF for an EPC CUPS (control and user plane separation) architecture.

Similarly to the radio communication system 100 of figure 1, the radio communication system 400 includes a UE 402, a RAN 403, EPCs 404, 405 and 5GCs 406, 407. Further, as described with reference to figure 1, the EPCs 404, 405 include an MME 408, a PGW-C 410 and a PGW-U 411 and the 5GCs 406, 407 include an AMF 413, an SMF 414 and a UPF 415. In this example, in contrast to figure 1, the SGW is separated into SGW-Cs (SGWs control plane) 418 and one or more SGW-Us (SGWs user plane) 419. As illustrated, a SGW-C 418 may be combined to a combo network function 420 with a PGW-C 410 and an SMF 414.

Further, an interface between the combo network function 420 and SGW-U 419 and the combo network function 420 and PGW-U 411 are introduced. They may be similar to Sxa and Sxb in EPC CUPS and are accordingly also denoted by Sxa and Sxb, respectively.

According to one embodiment, the UE 102 is at first registered only in 5GC and not in both 5GC and in EPC. The combo network function 420 translates 5GC parameters into EPC parameters.

The combo network function 420 (e.g. in its SMF role) sets up a PDN connection via Sxa, Sxb, when receiving a PDU session to setup towards a EPC from the UE 402.

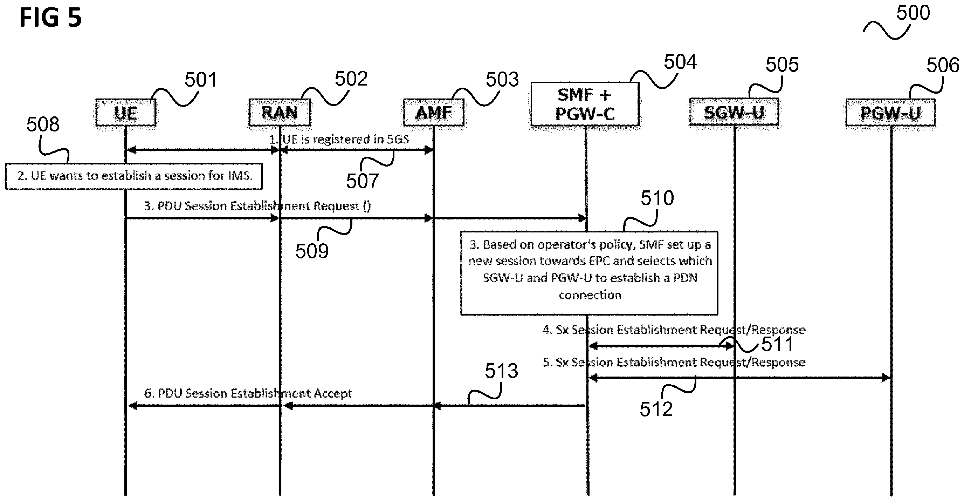

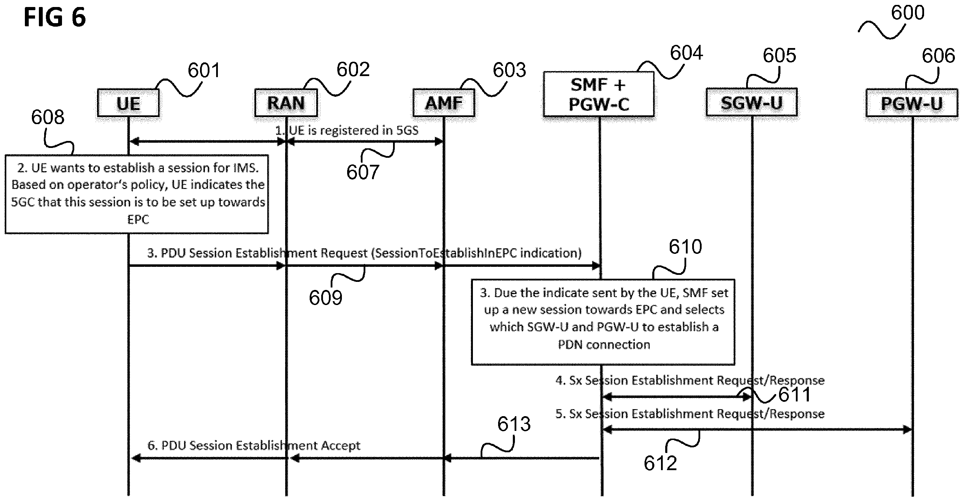

According to an embodiment, there are two options, which are illustrated in figures 5 and 6.

Figure 5 shows a message flow diagram 500 illustrating an option for the architecture of figure 4 in which based on a policy in the SMF 414, the SMF 414 decides to establish a session in EPC via SGW-U 419 with the help of the Sxa interface.

The message flow takes place between a UE 501 (e.g. corresponding to UE 402), a RAN 502 (e.g. corresponding to RAN 403), an AMF 503 (e.g. corresponding to AMF 413), an SMF + PGW-C 504 (e.g. corresponding to combo network function 420), an SGW-U 505 (e.g. corresponding to SGW-U 419) and a PGW-U 506 (e.g. corresponding to PGW-U 411).

In 507, the UE 501 registers with the 5GC.

In 508, the UE 501 intends to establish a session for IMS.

For this, in 509, the UE 501 sends a PDU session establishment request to the 5GC which the AMF 503 forwards the request to the SMF + PGW-C 504.

In 510, based on a policy of the operator of the 5GC, the SMF (+ PGW-C) 504 sets up a session towards the EPC and selects which SGW-U and PGW-U should establish a PDN connection.

In 511, the SMF 504 exchanges an Sx Session establishment request and response with the selected SGW-U 505.

In 512, the SMF 504 exchanges an Sx Session establishment request and response with the selected PGW-U 506.

In 513, the SMF 504 sends a PDU session establishment accept to the UE 501.

It should be noted that the UE 501 is not aware that the PDU session is set up via EPC and that the SMF 504 should know the topology of RAN, SGW-U and PGW-U.

Figure 6 shows a message flow diagram 600 illustrating an option for the architecture of figure 4 in which based on a policy or a local configuration, which is available in the UE 402, the UE 402 decides to establish a session in EPC via 5GC. The SMF 414 receives this indication from the UE 402 and hence establishes a session towards EPC using the Sxa and Sxb interfaces.

Similarly to figure, 5, the message flow takes place between a UE 601 (e.g. corresponding to UE 402), a RAN 602 (e.g. corresponding to RAN 403), an AMF 603 (e.g. corresponding to AMF 413), an SMF + PGW-C 604 (e.g. corresponding to combo network function 420), an SGW-U 605 (e.g. corresponding to SGW-U 419) and a PGW-U 606 (e.g. corresponding to PGW-U 411).

In 607, the UE 601 registers with the 5GC.

In 608, the UE 601 intends to establish a session for IMS. Based on a local configuration stored in the UE, or a policy of the operator, which is stored in the UE 601 or communicated to the UE 601, the UE 601 decides to indicate that the session is to be set up towards EPC.

Accordingly, in 609, the UE 601 sends a PDU session establishment request to the 5GC which the AMF 603 forwards to the SMF + PGW-C 604, wherein the request indicates that the session is to be established in EPC.

In 610, due to the indication in the request of 609, the SMF (+ PGW-C) 604 sets up a session towards the EPC and selects which SGW-U and PGW-U should establish a PDN connection.

In 611, the SMF 604 exchanges an Sx Session establishment request and response with the selected SGW-U 605.

In 612, the SMF 604 exchanges an Sx Session establishment request and response with the selected PGW-U 606.

In 613, the SMF 604 sends a PDU session establishment accept to the UE 601.

It should be noted that, as in the option of figure 5, the UE 601 is not aware that the PDU session is set up via EPC and that the SMF 604 should know the topology of RAN, SGW-U and PGW-U.

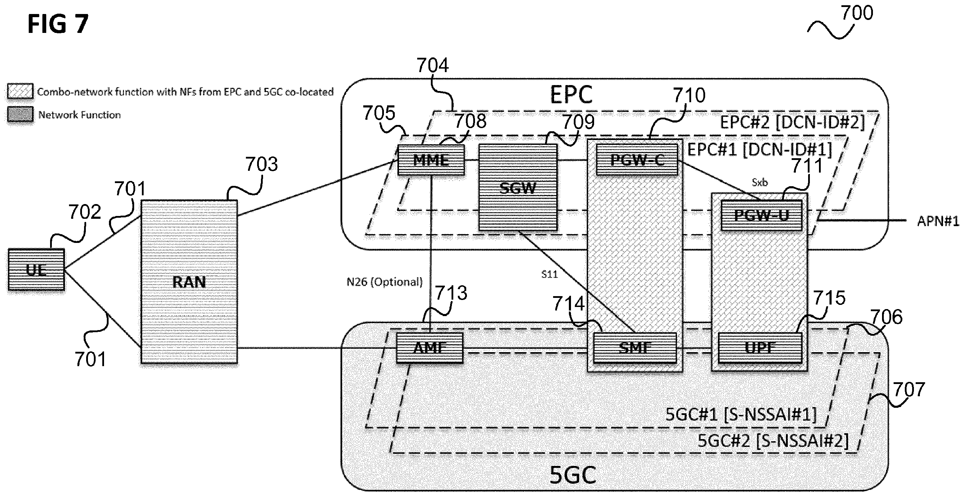

Figure 7 shows a radio communication system 700 for PDN Connection Establishment via 5GC for conventional EPC (i.e. without CUPS).

Similarly to the radio communication system 100 of figure 1, the radio communication system 700 includes a UE 702, a RAN 703, EPCs 704, 705 and 5GCs 706, 707. Further, as described with reference to figure 1, the EPCs 704, 705 include an MME 708, an SGW-809, a PGW-C 710 and a PGW-U 711 and the 5GCs 706, 707 include an AMF 713, an SMF 714 and a UDF 715.

An interface between SMF 714 and SGW 709 is introduced which may be similar to an S11 interface and is therefore also denoted as S11.

According to one embodiment, first, the UE 701 is not registered in both EPC and 5GC, but only in 5GC.

The SMF 714 sets up a PDN connection in EPC via the S11 interface when receiving a request to set up a PDU session towards one of the EPCs 404, 405 from the UE 401.

Based on a policy in the SMF 714, the SMF 714 decides to establish a session in EPC via the SGW 709 (e.g. SGW-U with the help of an Sxa interface).

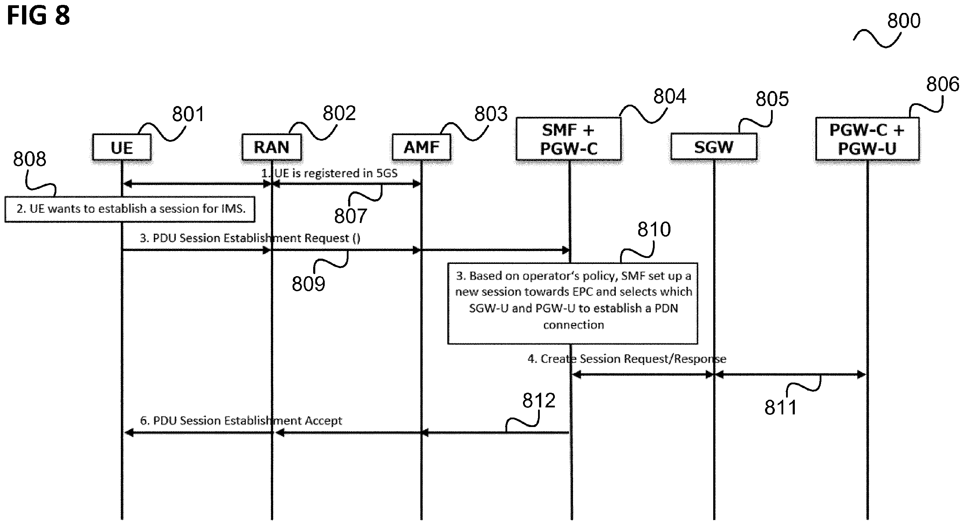

Figure 8 shows a message flow diagram 800 illustrating an example based on the architecture of figure 7.

The message flow takes place between a UE 801 (e.g. corresponding to UE 702), a RAN 802 (e.g. corresponding to RAN 703), an AMF 803 (e.g. corresponding to AMF 713), an SMF + PGW-C 804 (e.g. corresponding to combo network function 720), an SGW 805 (e.g. corresponding to SGW-U 709) and a PGW-C + PGW-U 806 (e.g. corresponding to a network function combining PGW-C 710 and PGW-U 711).

In 807, the UE 801 registers with the 5GC.

In 808, the UE 801 intends to establish a session for IMS.

For this, in 809, the UE 801 sends a PDU session establishment request to the 5GC which the AMF 803 forwards to the SMF + PGW-C 804.

In 810, based on a policy of the operator of the 5GC, the SMF (+ PGW-C) 804 sets up a session towards the EPC and selects which SGW-U and PGW-U should establish a PDN connection.

In 811, the SMF 804 exchanges a session establishment request and response with the selected SGW-U 805 and the selected PGW-U 806.

In 812, the SMF 804 sends a PDU session establishment accept to the UE 801.

It should be noted that the UE 801 is not aware that the PDU session is set up via EPC and that the SMF 804 should know the topology of RAN, SGW-U and PGW-U.

Furthermore, it should be noted that the approaches of figures 4 to 8 have more impact to the current EPS/5GS architecture due to the introduced interfaces and changes of existing procedures than the approaches described with reference to figures 2 to 4.

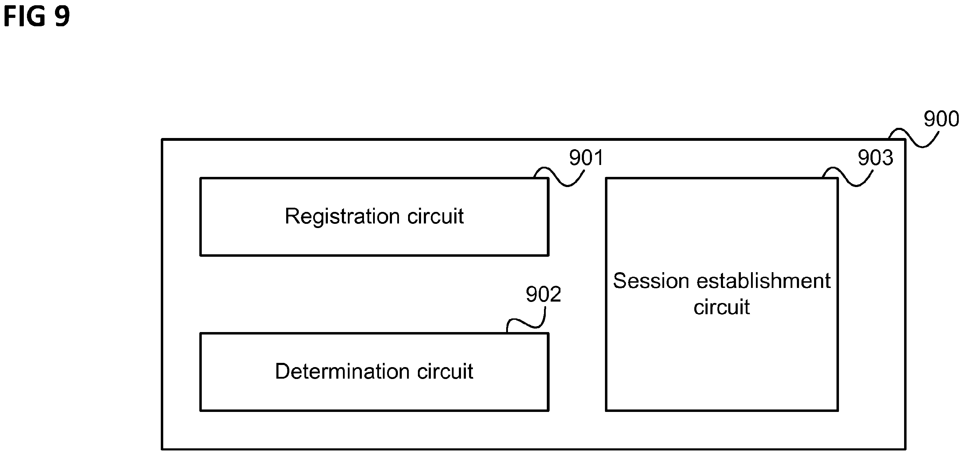

In summary, according to various embodiments, a communication terminal is provided as illustrated in figure 9.

Figure 9 shows a communication terminal 900.

The communication terminal 900 includes a registration circuit 901 configured to register the communication terminal with a first mobile communication system core network. It may further be configured to register the communication terminal with a second mobile communication system core network.

The communication terminal 900 further includes a determination circuit 902 configured to determine whether to establish a communication session (e.g. for a communication service or for an application running on the communication terminal 900) via the first mobile communication system core network or via a second mobile communication system core network. The information input enabling determination can be local information available at the communication terminal 900, e.g., local configuration or local policy at the UE. For the local policy at the UE, this can be provided by the communication network or pre-installed at the communication terminal 900, which may be updated by the communication network. Alternatively, the information input enabling determination can be provided by the communication network in different occasion, e.g., when the UE sends a request for establishment a PDU Session towards the 5GC for an IMS service, the communication network may provide an indication to the UE about the target CN preference for the IMS service as explained in one of the previous embodiments.

The communication terminal 900 further includes a session establishment circuit 903 configured to, if the determiner 902 has determined to establish the communication session via the second mobile communication system core network, establish the communication session via the second mobile communication system core network wherein the registration circuit 901 is configured to keep the registration of the communication terminal with the first mobile communication system core network. This means that the communication terminal keeps the registration of the communication terminal with the first mobile communication system core network is kept while establishing (and for example using) the communication session via the second mobile communication system core network. The registration of the communication terminal with the first mobile communication system core network may be released later, possibly while the communication session via the second mobile communication system core network is still established. This means that for a certain time period, the communication terminal is registered in both mobile communication system core networks.

The session establishment circuit 903 may be configured to establish an earlier communication session via the first mobile communication system core network (e.g. even before the (later) communication session which it establishes via the second mobile communication system core network is requested). This earlier communication session may be kept via the first mobile communication system core network even though the later communication session is established via the second mobile communication system core network (e.g. redirected to the second mobile communication system core network).

According to various embodiments, in other words, the communication terminal keeps the registration in a first core network (e.g. a 5GC) even if establishing a session with a second core network (e.g. a 4GC). Thus, the communication terminal is registered in both core networks which allows it to have sessions in both core networks at the same time. The core networks may be core networks according to 3GPP (e.g. Release 15) and the communication terminal may be configured to operate according to 3GPP. The core networks are for example core networks of one or more mobile radio communication systems, e.g. of the same operator.

The registration circuit 901 may keep the registration with the first (mobile communication system) core network even when the session establishment circuit establishes a session with the second (mobile communication system) core network. The registration circuit 901 may perform a registration with the second core network to allow the session establishment circuit to establish a session with the second core network or already before the communication terminal intends to establish the session (e.g. upon a request by an application running on the communication terminal). The registration with the first core network and the second core network may be based on the same subscription. This means that the first core network and the second core network may belong to the same mobile communication system (e.g. to the same operator) and the communication terminal has a subscription to the mobile communication system which allows it to use both core networks. The communication terminal may for example include a subscriber identity module corresponding to the subscription.

The determination circuit 902 may for example determine (i.e. decide) that a communication session should be established via the second core network, for example, in response to a rejection from the first core network to a request for establishment of the communication session via the first core network, or by taking into account the local configuration or the (local) policy available at the communication terminal. In other words, a request from the communication terminal for establishment of a communication session, e.g. for a certain application running on the communication terminal, may be redirected by the first core network to the second core network. In particular, the network side may guide the communication terminal to a particular core network.

Registering with a core network may for example mean attaching to the core network by means of an attach request in EPC or for example mean registering to the core network by means of an registration request in 5GC.

The communication session may be requested by an application running on the communication terminal for using a communication service. The application may for example indicate the type of session (or type of communication service) and the determiner (i.e. determination circuit) may determine the core network to use for the communication session based on the type. The determiner may also determine the core network to use for the communication session based on the application, e.g. based on an ID of the application. For example, a memory of the communication terminal may store a look-up table having associations of applications (e.g. application IDs) with core networks.

The components of the communication terminal (e.g. the registration circuit, the determination circuit and the session establishment circuit) may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit". In particular, the registration circuit, the determination circuit and the session establishment circuit may be implemented by a single processor, e.g. a processor of the communication terminal implementing a cellular communication stack.

The communication device may be a subscriber terminal such as cell phone and may for example be at least partially be implemented by a transceiver which may for example be at least partially implemented by a modem (e.g. an LTE and a 5G modem), a baseband processor or other transceiver components or also by an application processor. The communication device may for example be a communication terminal (e.g. a UE) such as a portable phone and may include typical communication terminal devices such as a transceiver (including e.g. a baseband processor, one or more filters, transmit chains, receive chains, amplifiers etc.), an antenna, a subscriber identity module, an application processor, a memory, a display, a battery, a speaker, a microphone etc.

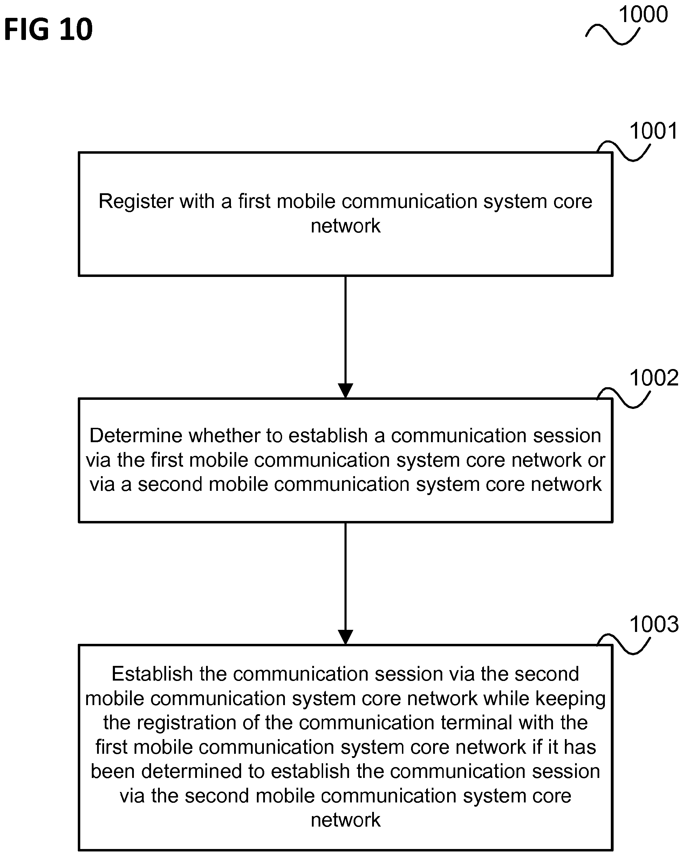

Figure 10 shows a flow diagram 1000 illustrating a method for establishing a communication session, e.g. performed by a communication terminal.

In 1001, the communication terminal registers with a first mobile communication system core network.

In 1002, the communication terminal determines whether to establish a communication session via the first mobile communication system core network or via a second mobile communication system core network.

In 1003, the communication terminal establishes the communication session via the second mobile communication system core network while keeping the registration of the communication terminal with the first mobile communication system core network if it has been determined to establish the communication session via the second mobile communication system core network.

Various examples are described below:
Example 1 is a communication terminal as illustrated in figure 9.
Example 2 is the communication terminal of Example 1, wherein the registration circuit is configured to, if the determiner has determined to establish the communication session via the second mobile communication system core network, register the communication terminal with the second mobile communication system core network.
Example 3 is the communication terminal of Example 2, wherein the registration with the first mobile communication system core network and the registration with the second mobile communication system core network use the same subscription of the communication terminal.
Example 4 is the communication terminal of any one of Examples 1 to 3, wherein the determiner is configured to determine whether to establish a communication session via the first mobile communication system core network or with the second mobile communication system core network based on an indication or response from the first mobile communication system core network or from the second mobile communication system core network, when the communication terminal sends a communication session establishment request to the first mobile communication system core network or to the second mobile communication system core network.
Example 5 is the communication terminal of any one of Examples 1 to 4, comprising a memory storing a core network selection policy and wherein the determiner is configured to determine whether to establish a communication session via the first mobile communication system core network or with the second mobile communication system core network based on the core network selection policy and/or the local configuration, available at the communication terminal, before the communication terminal performs any registration procedures to the first mobile communication system core network or to the second mobile communication system core network.
Example 6 is the communication terminal of any one of Examples 1 to 5, wherein the session establishment circuit is configured to, when establishing the communication session via the second mobile communication session, keep a further communication session established earlier via the first mobile communication system core network.
Example 7 is the communication terminal of any one of Examples 1 to 6, comprising an application processor running a plurality of applications, wherein the determiner is configured to determine, for each application, whether to establish a communication session for the application with the first mobile communication system core network or with the second mobile communication system and wherein the session establishment circuit is configured to establish a communication session for each application according to the determination by the determiner.
Example 8 is a method for establishing a communication session as illustrated in figure 10.
Example 9 is the communication terminal of Example 8, wherein the registration circuit is configured to, if the determiner has determined to establish the communication session via the second mobile communication system core network, register the communication terminal with the second mobile communication system core network.
Example 10 is the communication terminal of Example 9, wherein the registration with the first mobile communication system core network and the registration with the second mobile communication system core network use the same subscription of the communication terminal.
Example 11 is the communication terminal of any one of Examples 8 to 10, comprising determining whether to establish a communication session via the first mobile communication system core network or with the second mobile communication system core network based on an indication or a response from the first mobile communication system core network or from the second mobile communication system core network, when the communication terminal sends a communication session establishment request to the first mobile communication system core network or to the second mobile communication system core network.
Example 12 is the communication terminal of any one of Examples 8 to 11, comprising a memory storing a core network selection policy and wherein the determiner is configured to determine whether to establish a communication session via the first mobile communication system core network or with the second mobile communication system core network based on the core network selection policy and/or the local configuration, available at the communication terminal before the communication terminal performs any registration procedures to the first mobile communication system core network or to the second mobile communication system core network.
Example 13 is the communication terminal of any one of Examples 8 to 12, comprising, when establishing the communication session via the second mobile communication session, keeping a further communication session established earlier via the first mobile communication system core network.
Example 14 is the communication terminal of any one of Examples 8 to 13, comprising an application processor running a plurality of applications, wherein the determiner is configured to determine, for each application, whether to establish a communication session for the application with the first mobile communication system core network or with the second mobile communication system and wherein the session establishment circuit is configured to establish a communication session for each application according to the determination by the determiner.

According to a further example, the session establishment circuit is configured to establish the communication session via the second mobile communication system core network by means of a registration of the communication terminal with the second mobile communication system core network.

According to a further example, the first mobile communication system core network is of a later mobile communication generation than the second mobile communication system core network.

According to a further example, the first mobile communication system core network is a fifth generation mobile communication system core network and the second mobile communication system core network is a fourth generation mobile communication system core network.

According to a further example, the determiner is configured to determine whether to establish a communication session via the first mobile communication system core network or via the second mobile communication system core network based on an instruction from first core network.

According to a further example, the session establishment circuit is configured to establish a further communication session via the first mobile communication system core network.

According to a further example, the session establishment circuit is configured to, if the determiner has determined to establish the communication session via the first mobile communication system core network, establish the communication session via the first mobile communication system core network.

According to a further example, the first mobile communication system core network and the second mobile communication system core network are core networks of different mobile communication generations.

According to a further example, the core network selection policy or the local configuration specifies, for each application of a plurality of applications executable on the communication terminal, whether to establish a communication session for the application with the first mobile communication system core network or with the second mobile communication system.

According to a further example, a method to handle multiple sessions to be established simultaneously in multiple core networks of a mobile communication network is provided wherein a first core network includes a set of network functions, a second core network includes of a set of network functions and the method includes
- a radio access network (RAN) enabling a UE to access the mobile communication network and connecting to the first mobile core network and to the second mobile core network
- the UE accesses and registers with the mobile communication network, and establishes a communication session towards the first mobile core network or the second mobile core network or both
- a policy or local configuration available at the UE or available in the first mobile core network or available in the second mobile core network or both is used to determine whether the communication session requested by the UE to be established is to be transferred to another mobile core network.

The policy or the configuration can include an indication of preferred core network associated with a certain application.

The UE may request the communication session to be established by means of a request, e.g. containing an identifier for a target network, e.g., Data Network Name (DNN) or APN.

The first core network or the second core network or both may indicate to the UE a preferred core network for a communication session requested by the UE.

The policy or the location configuration available at the UE can be pre-configured or sent by the first core network or by the second core network while the UE is registered with the core network.

It should be noted that one or more of the features of any of the examples above may be combined with any one of the other examples.

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A communication terminal comprising:
a registration circuit configured to register the communication terminal with a first mobile communication system core network;
a determination circuit configured to determine whether to establish a communication session via the first mobile communication system core network or via a second mobile communication system core network;
a session establishment circuit configured to, if the determiner has determined to establish the communication session via the second mobile communication system core network, establish the communication session via the second mobile communication system core network, wherein the registration circuit is configured to keep the registration of the communication terminal with the first mobile communication system core network.

2. The communication terminal of claim 1, wherein the registration circuit is configured to, if the determiner has determined to establish the communication session via the second mobile communication system core network, register the communication terminal with the second mobile communication system core network.

3. The communication terminal of claim 2, wherein the registration with the first mobile communication system core network and the registration with the second mobile communication system core network use the same subscription of the communication terminal.

4. The communication terminal of any one of claims 1 to 3, wherein the determiner is configured to determine whether to establish a communication session via the first mobile communication system core network or with the second mobile communication system core network based on an indication or response from the first mobile communication system core network or from the second mobile communication system core network, when the communication terminal sends a communication session establishment request to the first mobile communication system core network or to the second mobile communication system core network.

5. The communication terminal of any one of claims 1 to 4, comprising a memory storing a core network selection policy and wherein the determiner is configured to determine whether to establish a communication session via the first mobile communication system core network or with the second mobile communication system core network based on the core network selection policy and/or the local configuration, available at the communication terminal, before the communication terminal performs any registration procedures to the first mobile communication system core network or to the second mobile communication system core network.

6. The communication terminal of any one of claims 1 to 5, wherein the session establishment circuit is configured to, when establishing the communication session via the second mobile communication session, keep a further communication session established earlier via the first mobile communication system core network.

7. The communication terminal of any one of claims 1 to 6, comprising an application processor running a plurality of applications, wherein the determiner is configured to determine, for each application, whether to establish a communication session for the application with the first mobile communication system core network or with the second mobile communication system and wherein the session establishment circuit is configured to establish a communication session for each application according to the determination by the determiner.

8. A method for establishing a communication session comprising:
registering with a first mobile communication system core network;
determining whether to establish a communication session via the first mobile communication system core network or via a second mobile communication system core network; and
establishing the communication session via the second mobile communication system core network while keeping the registration of the communication terminal with the first mobile communication system core network if it has been determined to establish the communication session via the second mobile communication system core network.

9. The communication terminal of claim 8, wherein the registration circuit is configured to, if the determiner has determined to establish the communication session via the second mobile communication system core network, register the communication terminal with the second mobile communication system core network.

10. The communication terminal of claim 9, wherein the registration with the first mobile communication system core network and the registration with the second mobile communication system core network use the same subscription of the communication terminal.

11. The communication terminal of any one of claims 8 to 10, comprising determining whether to establish a communication session via the first mobile communication system core network or with the second mobile communication system core network based on an indication or a response from the first mobile communication system core network or from the second mobile communication system core network, when the communication terminal sends a communication session establishment request to the first mobile communication system core network or to the second mobile communication system core network.

12. The communication terminal of any one of claims 8 to 11, comprising a memory storing a core network selection policy and wherein the determiner is configured to determine whether to establish a communication session via the first mobile communication system core network or with the second mobile communication system core network based on the core network selection policy and/or the local configuration, available at the communication terminal before the communication terminal performs any registration procedures to the first mobile communication system core network or to the second mobile communication system core network.

13. The communication terminal of any one of claims 8 to 12, comprising, when establishing the communication session via the second mobile communication session, keeping a further communication session established earlier via the first mobile communication system core network.

14. The communication terminal of any one of claims 8 to 13, comprising an application processor running a plurality of applications, wherein the determiner is configured to determine, for each application, whether to establish a communication session for the application with the first mobile communication system core network or with the second mobile communication system and wherein the session establishment circuit is configured to establish a communication session for each application according to the determination by the determiner.

## Amended claims

### Amended claims in accordance with Rule 137(2) EPC.

1. A communication terminal comprising:
a registration circuit configured to register the communication terminal with a first mobile communication system core network, wherein the first mobile communication system core network is an Evolved Packet Core network, EPC, or a 5G Core network, 5GC;
an application processor running a plurality of applications;
a session establishment circuit configured to establish a first communication session via the first mobile communication system core network;
a determination circuit configured to determine, for an application of the plurality of applications, whether to establish a second communication session for the application via the first mobile communication system core network or via a second mobile communication system core network, wherein the second mobile communication system core network is an Evolved Packet Core network, EPC, or a 5G Core network, 5GC;
wherein the session establishment circuit is configured to keep the first communication session established via the first mobile communication system core network and to establish the second communication session via the second mobile communication system core network if the determination circuit has determined to establish the second communication session via the second mobile communication system core network, and wherein the registration circuit is configured to keep the registration of the communication terminal with the first mobile communication system core network.

2. The communication terminal of claim 1, wherein the registration circuit is configured to, if the determination circuit has determined to establish the communication session via the second mobile communication system core network, register the communication terminal with the second mobile communication system core network.

3. The communication terminal of claim 2, wherein the registration with the first mobile communication system core network and the registration with the second mobile communication system core network use the same subscription of the communication terminal.

4. The communication terminal of any one of claims 1 to 3, wherein the determination circuit is configured to determine whether to establish a communication session via the first mobile communication system core network or via the second mobile communication system core network based on an indication or response from the first mobile communication system core network or from the second mobile communication system core network, when the communication terminal sends a communication session establishment request to the first mobile communication system core network or to the second mobile communication system core network.

5. The communication terminal of any one of claims 1 to 4, comprising a memory storing a core network selection policy and wherein the determination circuit is configured to determine whether to establish a communication session via the first mobile communication system core network or via the second mobile communication system core network based on the core network selection policy and/or the local configuration, available at the communication terminal, before the communication terminal performs any registration procedures to the first mobile communication system core network or to the second mobile communication system core network.

6. A method for establishing a communication session between a communication terminal and a mobile communication system core network comprising:
registering with a first mobile communication system core network, wherein the first mobile communication system core network is an Evolved Packet Core network, EPC, or a 5G Core network, 5GC;
running a plurality of applications;
establishing a first communication session via the first communication system core network;
determining whether to establish a second communication session for the application via the first mobile communication system core network or via a second mobile communication system core network, wherein the second mobile communication system core network is an Evolved Packet Core network, EPC, or a 5G Core network, 5GC; and
establishing, if it has been determined to establish the second communication session via the second mobile communication system core network, the second communication session via the second mobile communication system core network while keeping the first communication session established via the first mobile communication system core network and while keeping the registration of the communication terminal with the first mobile communication system core network.

7. The method of claim 6 comprising, if it has been determined to establish the communication session via the second mobile communication system core network, registering the communication terminal with the second mobile communication system core network.

8. The method of claim 6 comprising registering the first mobile communication system core network and registering the second mobile communication system core network using the same subscription of the communication terminal.

9. The method of any one of claims 6 to 8, comprising determining whether to establish a communication session via the first mobile communication system core network or via the second mobile communication system core network based on an indication or a response from the first mobile communication system core network or from the second mobile communication system core network, when the communication terminal sends a communication session establishment request to the first mobile communication system core network or to the second mobile communication system core network.

10. The method of any one of claims 6 to 9, comprising storing a core network selection policy and determining whether to establish a communication session via the first mobile communication system core network or via the second mobile communication system core network based on the core network selection policy and/or the local configuration, available at the communication terminal before registering to the first mobile communication system core network or to the second mobile communication system core network.
